(19) Europäisches Patentamt
European Patent Office
Office européen des brevets

(11) EP 3 351 662 B1

(12) **EUROPEAN PATENT SPECIFICATION**

(45) Date of publication and mention of the grant of the patent:
**06.11.2024 Bulletin 2024/45**

(21) Application number: **16846331.3**

(22) Date of filing: **07.09.2016**

(51) International Patent Classification (IPC):
***D01F 6/66*** *(2006.01)* ***D01F 8/16*** *(2006.01)*

(52) Cooperative Patent Classification (CPC):
**D01F 6/66; D01F 8/16**

(86) International application number:
**PCT/JP2016/076234**

(87) International publication number:
**WO 2017/047460 (23.03.2017 Gazette 2017/12)**

(54) **FIBER FOR COOL CONTACT SENSATION AND FIBER PRODUCT IN WHICH SAME IS USED**

FASER FÜR KÜHLE KONTAKTEMPFINDUNG UND FASERPRODUKT MIT VERWENDUNG DARIN

FIBRE POUR SENSATION DE CONTACT FRAIS, ET PRODUIT DE FIBRE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2015 JP 2015184686**

(43) Date of publication of application:
**25.07.2018 Bulletin 2018/30**

(73) Proprietor: **Mitsubishi Gas Chemical Company, Inc.**
**Tokyo 100-8324 (JP)**

(72) Inventors:
- **ITO, Akira**
  **Tokyo 100-8324 (JP)**
- **SUNAGA, Daisuke**
  **Yokkaichi-shi**
  **Mie 510-0886 (JP)**

(74) Representative: **Müller-Boré & Partner Patentanwälte PartG mbB**
**Friedenheimer Brücke 21**
**80639 München (DE)**

(56) References cited:
**EP-A1- 3 272 917**
**EP-A2- 1 321 546**
**WO-A1-2014/050448**
**WO-A1-2016/147998**
**WO-A1-2016/147998**
**JP-A- 2003 183 943**
**JP-A- 2003 183 943**
**JP-A- 2003 268 627**
**JP-A- 2003 268 627**
**JP-A- 2006 009 205**
**JP-A- 2008 163 505**
**JP-A- H08 144 128**
**JP-B1- S 436 101**
**US-A1- 2010 190 406**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

The present invention relates to a fiber for contact cold sensation and fibrous products from the same.

### BACKGROUND ART

Polyacetal is an engineering plastic which is excellent in mechanical physical properties, heat resistance, chemical resistance, and electrical properties, and has been widely used in the fields of, for example, electric devices, automobiles, machines, and building materials. Further, polyacetal can be formed into fibers, and therefore is being applied to the use as industrial materials, such as a brush and a filter, for which the mechanical strength, heat resistance, and chemical resistance that are advantageous properties of the polyacetal can be utilized (see, for example, Patent Literatures 1 to 3, and Non Patent Literature 1).

Recently, with respect to the material for underclothes for summer and sheets for bedclothes, studies have been made on a cloth having excellent contact cold sensation, which causes skins to feel cool when wearing or touching the cloth, giving them a sensation of coolness. For example, a cloth using a general material for cloth such as cotton and polyester fibers, e.g., PET, is disadvantageous in that fabric of the cloth itself exhibits only unsatisfactory contact cold sensation. Therefore, for the purpose of manufacturing the cloth having excellent contact cold sensation, there have been proposed a method in which an improved water absorption property is imparted to the fiber constituting the cloth, and a method in which an improved thermal conductivity is imparted to the fiber (see, for example, Patent Literature 4).

Patent Literature 5 discloses a yarn comprising a polyacetal copolymer comprising oxymethylene units and oxyalkylene units wherein the polyacetal contains 0.5 to 10 moles of oxyalkylene units per 100 moles of oxymethylene units.

### CITATION LIST

#### Patent Literature

Patent Literature 1: JP 2008-163505 A
Patent Literature 2: JP 2004-360146 A
Patent Literature 3: JP 2005-13829 A
Patent Literature 4: JP 2002-235278 A
Patent Literature 5: EP 1 321 546 A2

#### Non Patent Literature

Non Patent Literature 1: Hidetoshi Ookawa, DURACON (registered trademark) Fiber, Sen'i Gakkaishi (Fibers and Industries), vol. 65, No. 4 (2009), pp. 22-25

### SUMMARY OF INVENTION

#### Technical Problem

With respect to the fiber having an improved water absorption property for the purpose of improving the contact cold sensation, there can be mentioned, for example, a fiber comprising a resin to which a hydrophilic group such as a carboxyl group or a hydroxyl group is introduced. Further, with respect to the fiber having an improved thermal conductivity, there can be mentioned, for example, a fiber comprising a resin into which a filler having a high thermal conductivity is incorporated by kneading, and a fiber having a plated surface. The cloth using the above-mentioned fibers is theoretically expected to have contact cold sensation; however, in an actual functional test conducted in humans, the feeling of the cloth is almost the same as that of a cloth of untreated fiber, and the contact cold sensation of the cloth cannot be actually felt.

Further, Patent Literature 4 discloses a fiber having a contact cold sensation function, which is a fiber on which porous inorganic powder particles containing a water absorbing polymer therein are supported. The cloth comprising the fiber has a contact cold sensation at such a level that the coolness can be actually felt. However, for obtaining a satisfactory contact cold sensation, it is necessary that the cloth contain a large amount of the porous inorganic powder

particles, so that an adverse effect is caused on the texture or feel of the cloth, making it impossible to use the cloth in, for example, underclothes and sheets for bedclothes.

On the other hand, products obtained from a fiber of polyacetal are mainly used in the commercial application and industrial application in which the conventionally known properties of the polyacetal, such as mechanical properties, sliding properties, a heat resistance, and a chemical resistance, are utilized. There has not been known any fiber of polyacetal having excellent contact cold sensation, which can be used in, for example, underclothes and sheets for bedclothes.

The present invention has been made in view of the above problems, and an object of the present invention is to provide a fiber having excellent contact cold sensation, which can be made into a cloth having contact cold sensation even when it is used as a fabric. Further, an object of the present invention is to provide a fiber having excellent quick drying property and gloss which can be processed into a cloth having excellent quick drying property and gloss. Such a fiber can be suitably made into fibrous products which are required to have contact cold sensation, excellent feel, and quick drying property, e.g., clothing articles, such as underwear (underclothes) and outerwear (e.g., sportswear), bedding articles, such as a sheet, a bedding quilt (futon) cover, and a pillow cover, interior articles, such as a curtain, and interior automotive trims.

Solution to Problem

The present inventors have conducted extensive studies in order to achieve the above-mentioned objects. As a result, they have found that a single-layer fiber according to claim 1 having on a surface a polyacetal copolymer containing oxyalkylene unit(s) in a specific amount, and wherein a cloth comprising the fiber has a heat retention rate of not more than 10%, as measured in accordance with JIS L 1096 A method, has excellent contact cold sensation. Further, it has been found that the above-mentioned fiber has excellent quick drying property and excellent gloss, and the present invention has been completed.

Specifically, the present invention relates to a fiber for contact cold sensation according to claim 1 having on a surface a polyacetal copolymer (X) comprising oxymethylene unit(s) and oxyalkylene unit(s) represented by the general formula (1) below,

wherein the fiber is a single-layer fiber of the polyacetal copolymer (X), wherein the fiber has a single filament fineess of not more than 2.5 dtex, wherein the polyacetal copolymer (X) contains 0.2 to 5.0% by mole of the oxyalkylene unit(s), based on total moles of the oxymethylene unit(s) and oxyalkylene unit(s), wherein the polyacetal copolymer (X) has a degree of orientation of molecular chains of at least 80%, and
wherein a cloth comprising the fiber has a heat retention rate of not more than 10%, as measured in accordance with JIS L 1096 A method, and defined by the equation [1] below:

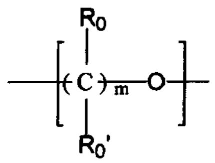

(1)

wherein each of $R_0$ and $R_0$' represents a hydrogen atom, an alkyl group having 1 to 8 carbon atoms, an organic group having an alkyl group having 1 to 8 carbon atoms, a phenyl group, or an organic group having a phenyl group, and a plurality of $R_0$'s and $R_0$'s are the same or different, and m represents an integer of 2 to 6,

$$\text{Heat retention rate (\%)} = (1 - C/D) \times 100 \qquad \text{Equation [1]}$$

wherein C represents the quantity of heat per unit surface area, which is dissipated within a period of 2 hours from a hot plate set to a temperature of 36±0.5°C when the cloth comprising the fiber is placed on the hot plate; and D represents the quantity of heat per unit surface area, which is dissipated within a period of 2 hours from a hot plate set to a temperature of 36±0.5°C when the cloth comprising the fiber is not placed on the hot plate.

The invention also relates to a clothing article, a bedding article , an interior article and an interior automotive trim from the fiber according to claim 1.

Advantageous Effects of Invention

By the present invention, a fiber having excellent contact cold sensation can be provided. Further, a fiber having excellent quick drying property and excellent gloss as well as excellent contact cold sensation can be provided. Furthermore, the fiber of the present invention has excellent contact cold sensation, quick drying property, and gloss, and therefore there can be provided fibrous products having excellent texture and feel, such as a clothing article, a bedding article, an interior article, and an interior automotive trim.

DESCRIPTION OF EMBODIMENTS

<Fiber having excellent contact cold sensation>

Hereinbelow, the present invention will be described in detail. The present invention is directed to a fiber according to claim 1, as described above.

The contact cold sensation in the present invention is an index for a functional test, indicating whether the coolness of a fiber, or a cloth or fibrous product from the fiber is felt or not when they touch the skin. The fiber for contact cold sensation of the present invention shows excellent contact cold sensation. This is because the fiber for contact cold sensation of the present invention may provide us with satisfactory coolness at functional test level, even when the fiber is made into a cloth and used. That is, when wearing a clothing article formed from the fiber of the present invention, the clothing article may give almost all humans contact cold sensation, making it possible to give them a sensation of coolness. Accordingly, a fibrous product using the fiber for contact cold sensation of the present invention may also provide us with satisfactory coolness at functional test level. Moreover, the fiber for contact cold sensation of the present invention, and a cloth and a fibrous product each obtained by processing the fiber have excellent quick drying property and excellent gloss.

<Fiber of the present invention>

The fiber for contact cold sensation of the present invention is a fiber having on the surface a polyacetal copolymer (X) containing oxymethylene unit(s) and oxyalkylene unit(s) represented by the general formula (1) below, wherein the polyacetal copolymer (X) contains 0.2 to 5.0% by mole of the oxyalkylene unit(s), based on total moles of the oxymethylene unit(s) and oxyalkylene unit(s).

That is, the fiber of the present invention has on the surface the above-mentioned polyacetal copolymer (X) containing oxyalkylene unit(s) in a specific content. The form of the fiber having polyacetal copolymer (X) on the surface is a form of a single-layer fiber of polyacetal copolymer (X).

The form of a single-layer fiber of the above-mentioned form [A] of polyacetal copolymer (X) is a fiber comprising polyacetal copolymer (X). The single-layer fiber can be obtained by melt spinning polyacetal copolymer (X) and optionally further subjecting the spun copolymer to stretching.

With respect to the fiber having polyacetal copolymer (X) on the surface of the present invention, the fiber has a degree of orientation of molecular chains of polyacetal copolymer (X) of at least 80%, and especially preferred is a fiber in which the degree of orientation is at least 90% among the fibers of the above-mentioned forms. The reason for this is that the higher the degree of orientation, the more desirable the contact cold sensation. The upper limit of the degree of orientation is not limited in view of the contact cold sensation, and hence is usually 100%. However, from the viewpoint of facilitating the production, the degree of orientation is preferably at least 95%.

The contact cold sensation of the fiber of the present invention is affected by the oxyalkylene unit(s) content of polyacetal copolymer (X) and the degree of orientation of molecular chains of polyacetal copolymer (X) in the fiber. For this reason, the above-mentioned degree of orientation is appropriately selected taking into consideration the level of the contact cold sensation to be imparted to the fibrous product as well as the oxyalkylene unit(s) content of polyacetal copolymer (X). For example, polyacetal copolymer (X) having a large oxyalkylene unit(s) content tends to cause the contact cold sensation to be poor, but the larger the oxyalkylene unit(s) content of the polyacetal copolymer (X) the stronger the effect of the degree of orientation on the contact cold sensation. Therefore, by increasing the degree of orientation, it is possible to further improve the contact cold sensation.

The degree of orientation for the fiber having polyacetal copolymer (X) on the surface of the present invention can be determined using a wide-angle X-ray diffractometer as described below in Examples of the present specification.

With respect to the single filament fineness of the fiber having polyacetal copolymer (X) on the surface of the present invention, an acceptable value varies depending on the use of the fiber and is not more than 2.5 dtex.

<Method for producing the fiber of the present invention>

The fiber having polyacetal copolymer (X) on the surface of the present invention can be produced in accordance with any of the conventionally known methods for producing a fiber. For example, the fiber can be produced by melt spinning pellets of polyacetal copolymer (X). In this instance, from the viewpoint of increasing the degree of orientation, it is preferred that the melt spun fiber is further subjected to stretching. The stretching can be performed by any of the conventionally known methods and conditions. The draw ratio is preferably 3 times or more from the viewpoint of the degree of orientation. The upper limit of the draw ratio is not limited in view of the degree of orientation, but it is 15 times from the viewpoint of the stability during the production (preventing yarn breakage) and preventing excessive fibrillation. With respect to the apparatuses for melt spinning and stretching, any of those which are conventionally known can be used.

The shape of the cross-section of the fiber having polyacetal copolymer (X) on the surface of the present invention can be variously designed by selecting the shape of the nozzle spinneret used for melt spinning, but the shape of the cross-section is not particularly limited, and may be either a simple circular cross-section or a modified cross-section. Especially, when the fiber having a modified cross-section is used, it is possible to further improve the contact cold sensation.

<Polyacetal copolymer (X)>

Polyacetal copolymer (X) in the fiber having polyacetal copolymer (X) on the surface of the present invention has in the molecule thereof an oxymethylene unit(s) ($-CH_2-O-$) as well as an oxyalkylene unit(s) of a structure represented by the following general formula (1):

[Chemical formula 2]

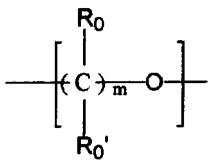

(1)

wherein each of $R_0$ and $R_0'$ represents a hydrogen atom, an alkyl group having 1 to 8 carbon atoms, an organic group having an alkyl group having 1 to 8 carbon atoms, a phenyl group, or an organic group having a phenyl group, and a plurality of $R_0$'s and $R_0$'s are the same or different, and m represents an integer of 2 to 6.

Examples of the alkyl groups having 1 to 8 carbon atoms include a methyl group, an ethyl group, a propyl group, an isopropyl group, a butyl group, an isobutyl group, a pentyl group, a hexyl group, and a cyclohexyl group. Examples of the organic groups having an alkyl group having 1 to 8 carbon atoms include a methoxy group, an ethoxy group, a propoxy group, an isopropoxy group, and a butoxy group. Examples of the organic groups having a phenyl group include a benzyl group and a phenethyl group.

With respect to the above-mentioned oxyalkylene unit(s), an oxyethylene group, an oxypropylene group, and an oxybutylene group are preferred, and an oxyethylene group is especially preferred.

One type of or two or more types of the above-mentioned oxyalkylene unit(s) may be contained in polyacetal copolymer (X). That is, polyacetal copolymer (X) in the present invention includes not only a bipolymer but also a multipolymer.

Further, polyacetal copolymer (X) in the present invention may be a polyacetal copolymer further having a block structure other than the oxymethylene unit(s) and oxyalkylene unit(s) or may be a polyacetal copolymer further having a branched structure in the molecule thereof. Examples of such polyacetal copolymers include a polyacetal copolymer having a structure derived from a chain transfer agent introduced in its terminals, the copolymer being obtained by using as a chain transfer agent a thermoplastic resin or oligomer having a functional group having active hydrogen, such as a hydroxyl group, in the end or middle of the molecule thereof; and a polyacetal copolymer which is obtained by conducting a polymerization reaction in the presence of a compound containing a copolymerizable cyclic formal site in the backbone thereof, such as polyvinyl formal.

Polyacetal copolymer (X) in the present invention may be produced using as a termonomer, an epoxy compound, such as glycidyl ether, or allyl ether, for example; and it includes such a polyacetal copolymer having a structure derived from any of the above compounds.

Generally, the content of oxyalkylene unit(s) (mole of oxyalkylene unit(s)) in a polyacetal copolymer is in the wide range of from 0.01 to 20% by mole, but the content of oxyalkylene unit(s) (mole of oxyalkylene unit(s)) in polyacetal copolymer (X) in the present invention, based on total moles of the oxymethylene unit(s) and oxyalkylene unit(s), is 0.2 to 5.0% by mole, and preferably 0.2 to 4.0% by mole. When the oxyalkylene unit(s) content is at least 0.2% by mole, or

not more than 5.0% by mole, the contact cold sensation is excellent. Especially, when the oxyalkylene unit(s) content is at least 0.2% by mole, or not more than 4.0% by mole, the contact cold sensation is especially excellent. As mentioned above, the contact cold sensation of the cloth from the fiber of the present invention is affected by the oxyalkylene unit(s) content of polyacetal copolymer (X) and the degree of orientation of the fiber, and therefore the oxyalkylene unit(s) content of polyacetal copolymer (X) as well as the degree of orientation are appropriately selected within the above-mentioned ranges according to the desired use of the cloth. Especially, the fiber having a smaller oxyalkylene unit(s) content and a higher degree of orientation of the molecular chains of polyacetal copolymer (X) is superior in contact cold sensation.

In the present invention, one polyacetal copolymer (X) may be used alone, two or more polyacetal copolymers (X) having different oxyalkylene units may be used in combination, or two or more polyacetal copolymers (X) having different oxyalkylene unit(s) contents may be used in combination. When two or more polyacetal copolymers (X) having different oxyalkylene units may be used in combination, or two or more polyacetal copolymers (X) having different oxyalkylene unit(s) contents are used in combination, they may be in a state in which the polyacetal copolymers are mixed with each another, a state in which the polyacetal copolymers constitute an "islands-in-a-sea" configuration or are in a dispersed state derived from the "islands-in-a-sea" configuration, or a state in which the polyacetal copolymers are present side by side.

Polyacetal copolymer (X) in the present invention preferably has an MVR (Melt Volume Rate) of not more than 100 $cm^3$/10 minutes, more preferably not more than 80 $cm^3$/10 minutes, especially preferably not more than 60 $cm^3$/10 minuites, as measured in accordance with ISO 1133. Although the polyacetal copolymer having a larger MVR value is more suitable for obtaining a thin fiber by melt spinning, the polyacetal copolymer having an MVR value of not more than 100 $cm^3$/10 minutes may give a fiber having excellent mechanical physical properties (particularly tenacity). With respect to the lower limit of the MVR value, there is no particular limitation. However, the polyacetal copolymer having a smaller the MVR value results in a higher melt viscosity upon melt spinning, as the result, the polyacetal copolymer cannot follow the change in shape, making it difficult to efficiently obtain a thin fiber. Therefore, the lower limit of the MVR value is preferably at least 3 $cm^3$/10 minutes, more preferably at least 8 $cm^3$/10 minutes for obtaining a thinner fiber.

<Method for producing polyacetal copolymer (X)>

The method for producing polyacetal copolymer (X) in the present invention is not limited, and polyacetal copolymer (X) may be produced by any of the conventionally known methods. For example, with respect to the method for producing a polyacetal resin having oxymethylene unit(s) and oxyalkylene unit(s) having 2 to 4 carbon atoms as constituent units, the polyacetal resin can be produced by subjecting to copolymerization a cyclic acetal for oxymethylene unit(s), such as a trimer (trioxane) or a tetramer (tetraoxane) of formaldehyde, and a cyclic acetal containing oxyalkylene unit(s) having 2 to 4 carbon atoms, such as ethylene oxide, 1,3-dioxolane, 1,3,6-trioxocane, or 1,3-dioxepane. Especially, polyacetal copolymer (X) in the present invention is preferably a copolymer of a cyclic acetal, such as trioxane or tetraoxane, and ethylene oxide or 1,3-dioxolane, especially preferably a copolymer of trioxane and 1,3-dioxolane.

For example, polyacetal copolymer (X) in the present invention can be obtained by a method in which a cyclic acetal for oxymethylene unit(s) and a cyclic acetal comonomer containing oxyalkylene unit(s) having 2 to 4 carbon atoms are subjected to bulk polymerization using a polymerization catalyst. For the deactivation treatment of the polymerization catalyst and polymerization growth end, if necessary, a reaction terminator may be used. Further, for modifying the molecular weight of the polyacetal copolymer, if necessary, a molecular weight modifier may be used. With respect to the types and amounts of the polymerization catalyst, reaction terminator, and molecular weight modifier usable in the production of polyacetal copolymer (X) in the present invention, there is no particular limitation as long as the advantageous effects of the present invention are not adversely affected, and any of the conventionally known polymerization catalysts, reaction terminators, and molecular weight modifiers can be appropriately used.

With respect to the polymerization catalyst, there is no particular limitation, but examples of polymerization catalyst include Lewis acids, such as boron trifluoride, tin tetrachloride, titanium tetrachloride, phosphorus pentachloride, phosphorus pentafluoride, arsenic pentafluoride, and antimony pentafluoride; and complex compounds or salt compounds of the above Lewis acids. Further, the examples also include protonic acids, such as trifluoromethanesulfonic acid and perchloric acid; esters of a protonic acid, such as an ester of perchloric acid and a lower aliphatic alcohol; and anhydrides of a protonic acid, including a mixed acid anhydride of perchloric acid and a lower aliphatic carboxylic acid. The additional examples include triethyloxonium hexafluorophosphate, triphenylmethyl hexafluoroarsenate, acetyl hexafluoroborate, a heteropolyacid or an acid salt thereof, an isopolyacid or an acid salt thereof, and a perfluoroalkylsulfonic acid or an acid salt thereof. Of these, preferred are compounds containing boron trifluoride, and especially preferred are boron trifluoride diethyl etherate and boron trifluoride dibutyl etherate, which are a complex with an ether.

The amount of the polymerization catalyst used is not particularly limited, but is generally in the range of from $1.0 \times 10^{-8}$ to $2.0 \times 10^{-3}$ mol, preferably in the range of from $5.0 \times 10^{-8}$ to $8.0 \times 10^{-4}$ mol, especially preferably in the range of from $5.0 \times 10^{-8}$ to $1.0 \times 10^{-4}$ mol, per mol of the total of monomers (the sum of the trioxane and comonomers).

With respect to the reaction terminator, there is no particular limitation, but examples of reaction terminator include trivalent organophosphorus compounds, amine compounds, and hydroxides of an alkali metal or alkaline earth metal. These reaction terminators can be used alone or in combination. Of these, preferred are trivalent organophosphorus compounds, tertiary amines, and hindered amines.

With respect to the amount of the reaction terminator used, there is no particular limitation as long as the amount is sufficient to deactivate the polymerization catalyst, but the amount of the reaction terminator is generally in the range of from $1.0 \times 10^{-1}$ to $1.0 \times 10$’, in terms of a molar ratio of the reaction terminator to the polymerization catalyst.

With respect to the molecular weight modifier, there is no particular limitation, but examples of molecular weight modifier include methylal, methoxymethylal, dimethoxymethylal, trimethoxymethylal, and oxymethylene di-n-butyl ether. Of these, methylal is preferred. The amount of the molecular weight modifier used is appropriately determined according to the intended molecular weight. Usually, the amount of the molecular weight modifier added is adjusted in the range of from 0 to 0.1% by mass, based on the mass of the all monomers.

<Optional components and other components which may be added to polyacetal copolymer (X)>

Further, when practicing the present invention, a hindered phenol compound, a hindered amine compound, an amino-substituted triazine compound, a phosphorus stabilizer, a metal-containing compound indicated by the group consisting of a hydroxide, fatty acid salt, inorganic acid salt, and alkoxide of an alkali metal or alkaline earth metal can be added to polyacetal copolymer (X) in the present invention, provided that the intended purpose is not adversely affected. Hereinafter, in the present specification, the above-mentioned "a hindered phenol compound, a hindered amine compound, an amino-substituted triazine compound, a phosphorus stabilizer, and a metal-containing compound indicated by the group consisting of a hydroxide, fatty acid salt, inorganic acid salt, and alkoxide of an alkali metal or alkaline earth metal" is frequently referred to as "optional component". With respect to the optional component, those which are conventionally known can be used.

Further, when practicing the present invention, in addition to the above-mentioned optional components, if necessary, various additives, such as a stabilizer, a nucleating agent, a release agent, a filler, a pigment, a dye, a lubricant, a plasticizer, an antistatic agent, an oil, a size, a sizing agent, an ultraviolet light absorber, a flame retardant, and a flame retardant auxiliary, or other thermoplastic resins or elastomers may be appropriately added to polyacetal copolymer (X) in the present invention, provided that the intended purpose is not adversely affected. Hereinafter, in the present specification, the above-mentioned "various additives, such as a stabilizer, a nucleating agent, a release agent, a filler, a pigment, a dye, a lubricant, a plasticizer, an antistatic agent, an oil, a size, an ultraviolet light absorber, a flame retardant, and a flame retardant auxiliary, or other resins or elastomers" are frequently referred to as "other components". Examples of fillers include mineral fillers, such as glass flakes, glass beads, wollastonite, mica, talc, boron nitride, calcium carbonate, kaolin, silicon dioxide, clay, silica, diatomaceous earth, graphite, and molybdenum disulfide, carbon black, and a pigment.

With respect to the method for adding the above-mentioned optional components or other components to polyacetal copolymer (X), there is no particular limitation, and, for example, the production thereof can be carried out by mixing and kneading the above-mentioned polyacetal copolymer (X) with optional components and/or other components as occasion demands in an arbitrary order. The conditions for mixing and kneading, such as the temperature and pressure for the mixing and kneading, may be appropriately selected according to any of the conventionally known methods for producing a polyacetal copolymer. For example, kneading may be conducted at or higher than the melting temperature of the polyacetal copolymer, and it is preferably conducted usually at least 180°C and not higher than 260°C. With respect to the apparatus for producing the polyacetal copolymer, there is no particular limitation, and, for example, a mixing or kneading apparatus conventionally used for producing a polyacetal copolymer of this type can be used. The above-mentioned optional components or other components may be separately mixed into, or allowed to penetrate into or adsorb on, or deposited on a fiber containing polyacetal copolymer (X).

<Heat retention rate>

There is a correlation between the contact cold sensation in the present invention and a heat retention rate determined in accordance with JIS L 1096 A method (constant temperature method). The heat retention rate tends to be high when a fiber has air layer that impedes heat conduction in its interior. For example, cotton has a structure in which the center portion of the fiber is hollow, and hence has a feature that the thermal conductivity of the fiber is such low that heat is unlikely to be dissipated from the fiber, and cotton has a heat retention rate as high as 20 to 30%. That is, the lower the heat retention rate, the more excellent the contact cold sensation.

With respect to the fiber for contact cold sensation of the present invention, a cloth comprising the fiber has a heat retention rate (%) of 10% or less, as measured in accordance with JIS L 1096 A method, and defined by the equation [1] below. The cloth used herein may be in the form of a woven cloth, a knitted cloth, or nonwoven fabric, and the method

of weaving or the method for producing the cloth is not particularly limited.

$$\text{Heat retention rate (\%)} = (1 - C/D) \times 100 \quad \text{Equation [1]}$$

wherein C represents the quantity of heat per unit surface area, which is dissipated within a period of 2 hours from a hot plate set to a temperature of 36±0.5°C when the cloth comprising the fiber is placed on the hot plate; and D represents the quantity of heat per unit surface area, which is dissipated within a period of 2 hours from a hot plate set to a temperature of 36±0.5°C when the cloth comprising the fiber is not placed on the hot plate.

The heat retention rate is preferably not more than 9%, especially preferably not more than 7%. When the heat retention rate is not more than 10%, the contact cold sensation is excellent. The lower limit of the heat retention rate is not limited in view of the contact cold sensation, and thus it would be 0%. The heat retention rate can be measured by the method described in the Examples.

The heat retention rate tends to become smaller as the content of the oxyalkylene unit(s) in polyacetal copolymer (X) decreases. From the viewpoint of the heat retention rate, the content of the oxyalkylene unit(s) in polyacetal copolymer (X) in the fiber of the present invention is preferably not more than 5% by mole, especially preferably not more than 4% by mole. Further, the heat retention rate tends to become better as the degree of orientation of molecular chains of polyacetal copolymer (X) increases. From the viewpoint of the heat retention rate, the degree of orientation is at least 80%, and especially preferably at least 90%.

<Quick drying property>

The quick drying property of a cloth in the present invention is an index for property of a cloth indicating how quickly the cloth containing water is dried. A fiber capable of being dried faster than a cloth comprising a polyester (PET) fiber, which has generally been known to have excellent quick drying property, is advantageous, because such a cloth gives a sensation of coolness and is more likely to allow us to feel cool when used in the applications of, e.g., underclothes and bedclothes that are to be in contact with the human skin. The reason for this is presumed that latent heat is lost by the evaporation of water absorbed by the fiber from the skin. The quick drying property can be measured by the method described in Examples. When the rate of drying of a cloth comprising a PET fiber is taken as a reference (1.0), the quick drying property is preferably 0.9 or less, more preferably 0.8 or less. The quick drying property tends to become better as the content of the oxyalkylene unit(s) in polyacetal copolymer (X) decreases. From the viewpoint of the quick drying property, the content of the oxyalkylene unit(s) in polyacetal copolymer (X) in the fiber in the present invention is preferably not more than 5% by mole, especially preferably not more than 2% by mole. Further, the quick drying property tends to become better as the degree of orientation of molecular chains of polyacetal copolymer (X) increases. From the viewpoint of the quick drying property, the degree of orientation is at least 80%, and especially preferably at least 90%.

<Gloss>

The gloss of a cloth in the present invention is an index indicating the degree of brightness of a fiber when the surface of the fiber receives a light. The larger the value of gloss, the smoother and gloss the surface of the cloth, so that a luxurious appearance can be imparted to the cloth. The gloss can be measured by the method for measuring a reflectance of a visible light described in Examples. When the gloss of a PET fiber is taken as a reference (1.0), the gloss in the present invention is preferably at least 1.1, more preferably at least 1.2. The gloss tends to be excellent when the content of the oxyalkylene unit(s) in polyacetal copolymer (X) is not more than 5% by mole, and therefore the content of the oxyalkylene unit(s) in polyacetal copolymer (X) in the fiber in the present invention is preferably not more than 5% by mole.

<Fibrous product>

With respect to the fibrous product obtained from the fiber for contact cold sensation of the present invention, there is no particular limitation, and, for example, there can be mentioned primary processed articles, such as a cloth, e.g., a woven cloth or a knitted cloth, and nonwoven fabric; and fabricated articles (described below) obtained by further processing, for example, the above-mentioned woven cloth. With respect to the primary processed article, specifically, there can be mentioned a form of a woven cloth obtained by combining a warp yarn and a weft yarn at a right angle into the shape of a plane having a certain width and thickness, a form of a knitted cloth obtained by connecting together loops into the shape of a plane, and forms of a twist, a braid, a lace, and a felt are also included. Particularly, the form of a woven cloth or a knitted cloth is preferred, because the property of contact cold sensation can be satisfactorily exhibited.

The fiber of the present invention has on the surface the above-mentioned polyacetal copolymer (X) containing oxyalkylene unit(s) in a specific amount. When the fiber is made into fibrous product such as a cloth, there may be used only the above-mentioned fiber having on the surface polyacetal copolymer (X) containing oxyalkylene unit(s) in a specific amount, or the above-mentioned fiber having on the surface polyacetal copolymer (X) containing oxyalkylene unit(s) in a specific amount and another fiber other than the above-mentioned fiber having on the surface polyacetal copolymer (X) containing oxyalkylene unit(s) in a specific amount (hereinafter, referred to as "another fiber"). Of these, use of a higher proportion of the above-mentioned fiber having on the surface polyacetal copolymer (X) containing oxyalkylene unit(s) in a specific amount is preferred from the viewpoint of excellent contact cold sensation.

With respect to the above-mentioned "another fiber", there is no particular limitation as long as it is other than the above-mentioned fiber having on the surface polyacetal copolymer (X) containing oxyalkylene unit(s) in a specific amount, but examples of such fibers include synthetic fibers, such as nylon, polyester, and polyurethane, and natural fibers, such as cotton, linen, and silk. The shape of the cross-section of another fiber can be variously designed by selecting the shape of the nozzle spinneret used for melt spinning, but is not particularly limited, and may be either a simple circular cross-section or a modified cross-section. Especially, when the fiber having a modified cross-section is used, it is possible to further improve the contact cold sensation.

Further, the fiber of the present invention may be made into a twisted yarn or covered yarn which is formed by combining together the above-mentioned fiber having on the surface polyacetal copolymer (X) containing oxyalkylene unit(s) in a specific amount and a synthetic fiber, such as nylon, polyester, or polyurethane, or a natural fiber, such as cotton, linen, or silk. Furthermore, the above-mentioned fiber having on the surface polyacetal copolymer (X) containing oxyalkylene unit(s) in a specific amount may be combined or blended with a synthetic fiber, such as nylon, polyester, or polyurethane, or a natural fiber, such as cotton, linen, or silk.

With respect to the method for making the fiber for contact cold sensation of the present invention into a fibrous product such as a cloth, there is no particular limitation, and a generally known method can be used. For example, there can be used a general method for producing a cloth, which is used in the production of the above-mentioned woven cloth obtained by combining a warp yarn and a weft yarn at a right angle into the shape of a plane having a certain width and thickness, knitted cloth obtained by connecting together loops into the shape of a plane, lace, braid, or felt. Further, in the case of a woven cloth or a knitted cloth, the way of weaving or knitting for the cloth is not particularly limited, and the woven cloth may be, for example, in a plain woven, twill woven, satin woven, mat woven, or designed woven form. The knitted cloth may be in a warp knitted or weft knitted form, or, for example, in a plain knitted, rib knitted, interlock knitted, or purl knitted form.

A primary processed article, such as a cloth, which is obtained from the fiber for contact cold sensation of the present invention, has also excellent contact cold sensation, and therefore can be further processed into fabricated articles, such as clothing articles, bedding articles, interior articles, daily miscellaneous items, and interior automotive trims. Differing from fibers obtained by adding an additive having an effect of contact cold sensation or a surface treatment agent thereto, or from those obtained by surface-treatment with such an additive or agent, the fiber for contact cold sensation of the present invention inherently has excellent resistance to washing, and therefore can be advantageously used as a raw material for various types of fibrous products. Particularly, the fiber of the present invention can be advantageously used as underwear, such as underclothes, outerwear, such as sportswear, pants, and a skirt, clothing articles, such as a shirt, nightwear, pantyhose, and stockings, bedding articles, such as a sheet, a bedding quilt (futon) cover, and a pillow cover, interior articles, such as a mat, a curtain, and a carpet, daily miscellaneous items, such as a handkerchief and a towel, and interior automotive trims, such as a seat and a seat cover.

## EXAMPLES

Hereinbelow, the embodiments and effects of the present invention will be described in more detail with reference to the following Examples and Comparative Examples, which should not be construed as limiting the scope of the present invention.

### <Polyacetal copolymer (X)>

Polyacetal copolymers (X) used in Examples and Comparative Examples are as follows. The oxyethylene group content of polyacetal copolymer (X) (percentage by mole of the oxyethylene group) is a value relative to the total moles of the oxymethylene unit(s) and the oxyethylene group.

POM-1: Polyacetal copolymer having an oxyethylene group content of 0.4% by mole and an MVR of 15.

POM-2: Polyacetal copolymer having an oxyethylene group content of 1.6% by mole and an MVR of 15.

POM-3: Polyacetal copolymer having an oxyethylene group content of 3.0% by mole and an MVR of 15.

POM-4: Polyacetal copolymer having an oxyethylene group content of 4.7% by mole and an MVR of 15.

POM-5: Polyacetal copolymer having an oxyethylene group content of 5.7% by mole and an MVR of 15.

<Measurement of MVR>

The MVR of polyacetal copolymer (X) was measured in accordance with ISO 1133.

<Measurement of the content of the oxyethylene group in polyacetal copolymer (X)>

Each of the polyacetal copolymers used in Examples and Comparative Examples was dissolved in hexafluoroisopropanol (d2) to prepare a sample for NMR measurement. The NMR spectrum was measured for the prepared sample to determine the content of the oxyethylene group in the polyacetal copolymer.

<Preparation of polyacetal copolymer fiber>

The polyacetal copolymer fiber for producing the cloths used in Examples and Comparative Examples was prepared as follows. The temperature of a cylinder and a nozzle portion was raised to 200°C, and a molten resin was discharged from the nozzle having 36 holes each having a diameter of 0.6 mm at a rate of 0.8 to 1.2 kg/h, whereupon an unstretched fiber was continuously taken at a take-up rate of about 200 to 400 m/minute. The obtained unstretched fiber was subsequently introduced to a heat stretching step and subjected to stretching treatment at a roll temperature of 120 to 140°C to yield a fiber sample. In the case of a core/sheath composite fiber, the injection rate from the nozzle was 0.4 kg/h for both of the resin for core component and the resin for sheath component.

<Other fiber>

PET (polyethylene terephthalate resin): A multifilament having a single filament fineness of 2 dtex was used as such.

<Measurement of the fineness of fiber>

With respect to the fineness [dtex (decitex)] of a fiber, the fiber diameter of a single filament was measured using an optical microscope, the fineness was calculated from the density of the fiber, and the average of the fineness values measured for 50 fibers was taken as the fineness of the fiber. In the case of a single-layer fiber of the polyacetal copolymer, the density of the fiber was 1.40 g/cm$^3$. In the case of a multilayer fiber, the density of the fiber was a weighted average of the density of the constituent materials. In the case of a single-layer fiber of PET, the density of the fiber was 1.37 g/cm$^3$.

<Measurement of the degree of orientation fc (%) of fiber>

Using a wide-angle X-ray diffractometer (DP-D1, manufactured by Shimadzu Corporation), and using CuK$\alpha$ (using a Ni filter) as a source of a ray, measurement was made (power: 45 KV; 40 mA). The degree of orientation (fc) of molecular chains was determined using formula [2] below from a half band width FWHM (°) of a distribution curve of a diffraction intensity (azimuth distribution curve) obtained by scanning in the circumferential direction with respect to the (100) crystal plane observed in the vicinity of 2$\theta$ = 22.2°.

$$fc\ (\%) = ((180° - FWHM)/180°) \times 100 \qquad \text{Formula [2]}$$

<Preparation of a cloth>

Each of the cloths used in Examples and Comparative Examples was obtained by knitting with a wales density of 130 loops/inch and a course density of 96 loops/inch using the fiber having a polyacetal copolymer on the surface prepared by the above-mentioned method or a PET fiber.

<Measurement of a heat retention rate of a cloth>

With respect to the cloths used in the Examples and Comparative Examples, the heat retention rate was measured in accordance with JIS L 1096 A method using a heat retention testing machine (Warmth retaining and thermal resistance tester ASTM-100A, manufactured by Daiei Kagaku Seiki Mfg. Co., Ltd.) by the procedure described below. First, a test specimen (cloth) having a size of 40 $\times$ 40 cm was placed on a hot plate (aluminum alloy plate) set to a temperature of 36$\pm$0.5°C and allowed to stand for 2 hours. The quantity of heat C per unit surface area (unit: J/cm$^2$)

dissipated through the test specimen within a period of 2 hours was determined. Meanwhile, substantially the same procedure as described above, except that the test specimen was not placed on the plate, was conducted, and the quantity of heat D per unit surface area (unit: $J/cm^2$) dissipated within a period of 2 hours was separately determined. The heat retention rate (%) of the cloth was calculated from the equation [1] below. The smaller the heat retention rate, the larger the transfer rate of heat, or the better the contact cold sensation.

$$\text{Heat retention rate (\%)} = (1 - C/D) \times 100 \quad \text{Equation [1]}$$

<Measurement of quick drying property (residual water content)>

A cloth having a size of 10 cm × 10 cm was impregnated with 0.6 g of water. The resultant cloth was allowed to stand in a suspended state in an environment at a temperature of 20°C and at a relative humidity of 65%. The mass of the suspended cloth was measured at intervals of predetermined time, and the residual water amount in the cloth was calculated to determine the residual water content (unit: % by mass). The period of time (minute) until the residual water content reached 10% by mass was taken as the index of quick drying property. The shorter the period of time, the more desirable the quick drying property.

<Measurement of gloss (visible light reflectance)>

Using an ultraviolet-visible-near infrared spectrophotometer UV-3600 (integrating sphere: ISR-3100), manufactured by Shimadzu Corporation, a visible light reflectance was determined, in terms of a reflectance of a light in the measurement wavelength range of from 400 to 780 nm. The larger the visible light reflectance, the higher the gloss.

<Test for contact cold sensation>

The feel obtained when touching each of the cloths from the fibers in Examples and Comparative Examples was evaluated in accordance with the four criteria A to D. The criteria for the evaluation are shown below.

A: The cool feel is especially excellent.
B: The cool feel is excellent.
C: The cool feel is good.
D: The cool feel is poor.

<Examples and Comparative Examples>

Table 1 shows Examples, which relate to: cloths prepared using a single-layer fiber of a polyacetal copolymer having an oxyethylene group content in the predetermined range, a cloth prepared using a multilayer fiber of a polyacetal copolymer having an oxyethylene group content in the predetermined range, and a cloth prepared using a multilayer fiber of a polyacetal copolymer having an oxyethylene group content in the predetermined range and a polylactic acid resin (PLA); as well as Comparative Examples, which relate to: a cloth prepared using a PET fiber, and a cloth prepared using a single-layer fiber of a polyacetal copolymer having an oxyethylene group content larger than the predetermined range.

[Table 1] (example 6 is a reference example)

| | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| Raw material for fiber | | POM-1 | POM-2 | POM-3 | POM-4 | POM-4 | POM-4 | POM-1 (core)/ POM-4 (sheath) | POM-1 (core)/ POM-4 (sheath) | PET | POM-5 |
| Oxyethylene group content of polyacetal copolymer [mol%] | | 0.4 | 1.6 | 3.0 | 4.7 | 4.7 | 4.7 | 0.4/4.7 | - /4.7 | - | 5.7 |
| Single fiber fineness [dtex] | | 2.3 | 2.3 | 2.3 | 2.3 | 2.3 | 12 | 2.3 | 2.3 | 2.3 | 12 |
| Degree of orientation of fiber [%] | | 87 | 84 | 84 | 82 | 93 | 63 | 85 | 84 | - | 72 |
| Results of evaluation of cloth | Heat retention rate [%] | 6.9 | 6.7 | 6.9 | 7.4 | 6.7 | 8.5 | 7.2 | 7.2 | 11.7 | 11.9 |
| | Quick drying property [min.] | 39 | 41 | 43 | 46 | 43 | 47 | 42 | 44 | 52 | 56 |
| | Gloss (visible light reflectance) [%] | 60 | 61 | 60 | 61 | 62 | 58 | 61 | 58 | 50 | 47 |
| | Cool feel test | A | A | A | B | A | C | B | B | D | D |

Examples 1 to 5, and 7-8 demonstrate that, having a heat retention rate of not more than 10%, the cloths prepared using a single-layer fiber of a polyacetal copolymer having an oxyalkylene unit(s) content in the predetermined range, the cloth prepared using a multilayer fiber of a polyacetal copolymer having an oxyalkylene unit(s) content in the predetermined range, and the cloth prepared using a multilayer fiber of a polyacetal copolymer having an oxyalkylene unit(s) content in the predetermined range and PLA provide excellent contact cold sensation. Further, Examples 4 and 5 demonstrate that, between the cloths having the same alkylene group content, the higher the degree of orientation of the fiber, the more desirable the contact cold sensation.

## Claims

1. A fiber for contact cold sensation having on a surface a polyacetal copolymer (X) comprising oxymethylene unit(s) and oxyalkylene unit(s) represented by the general formula (1) below,

    wherein the fiber is a single-layer fiber of the polyacetal copolymer (X),
    wherein the fiber has a sinsle filament fineness, determined by the method disclosed in the description, of not more than 2.5 dtex,
    wherein the polyacetal copolymer (X) contains 0.2 to 5.0% by mole of the oxyalkylene unit(s), based on total moles of the oxymethylene unit(s) and oxyalkylene unit(s),
    wherein the polyacetal copolymer (X) has a degree of orientation of molecular chains determined by the method disclosed in the description of at least 80%, and
    wherein a cloth comprising the fiber has a heat retention rate, determined by the method disclosed in the description, of not more than 10%, as measured in accordance with JIS L 1096 A method, and defined by the equation [1] below:

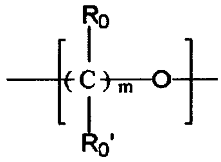 (1)

wherein each of $R_0$ and $R_0$' represents a hydrogen atom, an alkyl group having 1 to 8 carbon atoms, an organic group having an alkyl group having 1 to 8 carbon atoms, a phenyl group, or an organic group having a phenyl group, and a plurality of $R_0$s and $R_0$'s are the same or different, and m represents an integer of 2 to 6,

$$\text{Heat retention rate (\%)} = (1 - C/D) \times 100 \qquad \text{Equation [1]}$$

wherein C represents the quantity of heat per unit surface area, which is dissipated within a period of 2 hours from a hot plate set to a temperature of 36±0.5°C when the cloth comprising the fiber is placed on the hot plate; and D represents the quantity of heat per unit surface area, which is dissipated within a period of 2 hours from a hot plate set to a temperature of 36±0.5°C when the cloth comprising the fiber is not placed on the hot plate.

**2.** A clothing article from the fiber according to claim 1.

**3.** A bedding article from the fiber according to claim 1.

**4.** An interior article from the fiber according to claim 1.

**5.** An interior automotive trim from the fiber according to claim 1.

**Patentansprüche**

**1.** Faser für ein Kontaktkältegefühl, die auf einer Oberfläche ein Polyacetal-Copolymer (X) aufweist, das (eine) Oxymethylen-Einheit(en) und Oxyalkylen-Einheit(en), die durch die nachstehende allgemeine Formel (1) dargestellt ist/sind, umfasst,

wobei die Faser eine Einschichtfaser aus dem Polyacetal-Copolymer (X) ist,
wobei die Faser eine Einzelfilamentfeinheit, die durch das in der Beschreibung offenbarte Verfahren bestimmt wird, von nicht mehr als 2,5 dtex aufweist,
wobei das Polyacetal-Copolymer (X) 0,2 bis 5,0 Mol-% der Oxyalkylen-Einheit(en) auf der Basis der Gesamtmolzahl der Oxymethylen-Einheit(en) und der Oxyalkylen-Einheit(en) enthält,
wobei das Polyacetal-Copolymer (X) einen Ausrichtungsgrad von Molekülketten, der durch das in der Beschreibung offenbarte Verfahren bestimmt wird, von mindestens 80 % aufweist, und

wobei ein Gewebe, das die Faser umfasst, eine Wärmeretentionsrate, die durch das in der Beschreibung offenbarte Verfahren bestimmt wird, von nicht mehr als 10 % aufweist, die gemäß dem Verfahren nach JIS L 1096 A gemessen wird und durch die nachstehende Gleichung [1] festgelegt ist:

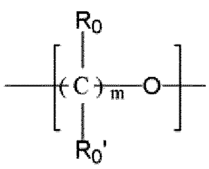 (1)

wobei jeder von $R_0$ und $R_0$' ein Wasserstoffatom, eine Alkylgruppe mit 1 bis 8 Kohlenstoffatomen, eine organische Gruppe mit einer Alkylgruppe mit 1 bis 8 Kohlenstoffatomen, eine Phenylgruppe oder eine organische Gruppe mit einer Phenylgruppe darstellt, und eine Mehrzahl von $R_0$ und $R_0$' gleich oder verschieden sind und m eine ganze Zahl von 2 bis 6 darstellt,

$$\text{Wärmeretentionsrate (\%)} = (1 - C/D) \times 100 \qquad \text{Gleichung [1]}$$

wobei C die Wärmemenge pro Einheitsoberfläche darstellt, die innerhalb eines Zeitraums von 2 Stunden von einer Heizplatte, die auf eine Temperatur von 36 ± 0,5 °C eingestellt ist, abgeführt wird, wenn das Gewebe, das die Faser umfasst, auf der Heizplatte angeordnet ist; und D die Wärmemenge pro Einheitsoberfläche darstellt, die innerhalb eines Zeitraums von 2 Stunden von einer Heizplatte, die auf eine Temperatur von 36 ± 0,5 °C eingestellt ist, abgeführt wird, wenn das Gewebe, das die Faser umfasst, nicht auf der Heizplatte angeordnet ist.

**2.** Bekleidungsgegenstand aus der Faser nach Anspruch 1.

**3.** Bettwäschegegenstand aus der Faser nach Anspruch 1.

**4.** Innenraumgegenstand aus der Faser nach Anspruch 1.

**5.** Kraftfahrzeuginnenverkleidung aus der Faser nach Anspruch 1.

## Revendications

**1.** Fibre pour sensation de froid au contact ayant sur une surface un copolymère de polyacétal (X) comprenant une/des unité(s) d'oxyméthylène et une/des unité(s) d'oxyalkylène représentées par la formule générale (1) ci-dessous,

dans laquelle la fibre est une fibre monocouche du copolymère de polyacétal (X),
dans laquelle la fibre a une finesse de filament unique, déterminée par le procédé divulgué dans la description, de pas plus de 2,5 dtex,
dans laquelle le copolymère de polyacétal (X) contient 0,2 à 5,0 % en mole de la/des unité(s) d'oxyalkylène, basés sur des moles totales de la/des unité(s) d'oxyméthylène et de la/des unité(s) d'oxyalkylène,
dans laquelle le copolymère de polyacétal (X) a un degré d'orientation de chaînes moléculaires déterminé par le procédé divulgué dans la description d'au moins 80 %, et
dans laquelle un tissu comprenant la fibre a un taux de rétention de chaleur, déterminé par le procédé divulgué dans la description, de pas plus de 10 %, tel que mesuré conformément au procédé de JIS L 1096 A, et défini par l'équation [1] ci-dessous :

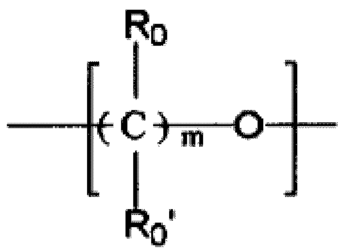

(1)

dans laquelle chacun de $R_0$ et $R_0'$ représente un atome d'hydrogène, un groupe alkyle ayant 1 à 8 atomes de carbone, un groupe organique ayant un groupe alkyle ayant 1 à 8 atomes de carbone, un groupe phényle, ou un groupe organique ayant un groupe phényle, et une pluralité de $R_0$ et $R_0'$ sont identiques ou différents, et m représente un entier de 2 à 6,

$$\text{Taux de rétention de chaleur (\%)} = (1 - C/D) \times 100 \qquad \text{Équation [1]}$$

dans laquelle C représente la quantité de chaleur par surface unitaire, qui est dissipée en l'espace d'une période de 2 heures à partir d'une plaque chauffante réglée sur une température de 36± 0,5 °C lorsque le tissu comprenant la fibre est placé sur la plaque chauffante ; et D représente la quantité de chaleur par surface unitaire, qui est dissipée en l'espace d'une période de 2 heures à partir d'une plaque chauffante réglée sur une température de 36± 0,5 °C lorsque le tissu comprenant la fibre n'est pas placé sur la plaque chauffante.

**2.** Article d’habillement à partir de la fibre selon la revendication 1.

**3.** Article de linge de lit à partir de la fibre selon la revendication 1.

**4.** Article d’intérieur à partir de la fibre selon la revendication 1.

**5.** Garniture automobile intérieure à partir de la fibre selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008163505 A
- JP 2004360146 A
- JP 2005013829 A
- JP 2002235278 A
- EP 1321546 A2


### Non-patent literature cited in the description


- **HIDETOSHI OOKAWA.** *Fiber, Sen'i Gakkaishi (Fibers and Industries),* 2009, vol. 65 (4), 22-25